# EUROPEAN PATENT SPECIFICATION

(11) **EP 4 478 439 B1**
(45) Date of publication and mention of the grant of the patent: **23.09.2026**
(21) Application number: 22963172.6
(22) Date of filing: 28.10.2022
(51) Int. Cl.: H01M 4/13, H01M 10/0587, H01M 4/139

(54) **ELECTRODE SHEET, ELECTRODE ASSEMBLY, SECONDARY BATTERY, AND ELECTRIC DEVICE**
ELEKTRODENFOLIE, ELEKTRODENANORDNUNG, SEKUNDÄRBATTERIE UND ELEKTRISCHE VORRICHTUNG
FEUILLE D'ÉLECTRODE, ENSEMBLE ÉLECTRODE, BATTERIE SECONDAIRE ET DISPOSITIF ÉLECTRIQUE

(43) Date of publication of application: 18.12.2024
(60) Divisional application: 26196923.2 / 4 811 443
(73) Proprietor: Contemporary Amperex Technology (Hong Kong) Limited, Hong Kong (HK)
(72) Inventor: LIU, Zhi, Ningde, Fujian 352100 (CN); CHEN, Ning, Ningde, Fujian 352100 (CN); DENG, Yaqian, Ningde, Fujian 352100 (CN); LV, Ruijing, Ningde, Fujian 352100 (CN); SHI, Dongyang, Ningde, Fujian 352100 (CN); JIN, Haizu, Ningde, Fujian 352100 (CN); LI, Baiqing, Ningde, Fujian 352100 (CN)
(74) Representative: Lorenz Seidler Gossel Part. mbB
(86) International application number: PCT/CN2022/128342
(87) International publication number: WO 2024/087190

(56) References cited:
- CN-A- 103 151 553
- CN-A- 109 565 033
- CN-U- 216 872 019
- JP-A- 2012 174 579
- US-A1- 2013 143 090

## Description

### TECHNICAL FIELD

The present application relates to the technical field of batteries, and more particularly, to an electrode plate, an electrode assembly, a secondary battery and an electrical device.

### BACKGROUND

With the widespread use of secondary batteries, the demand for the stabilities of performances of the secondary batteries is becoming higher increasingly, especially for an electrode assembly that generates electrochemical reactions in a secondary battery, the structural stability of the electrode assembly needs to be maintained during cyclic charging and discharging. The electrode assembly may be divided into a laminated structure and a winded structure due to different preparation processes.

Regarding the winded structure, due to the limitation in the design deficiency of an electrode plate with traditional structure, the electrode plate is prone to be fractured at a bending layer thereof during a hot pressing shaping process and the cyclic charging and discharging process in battery production. Thus, a decrease in the performance of the secondary battery is caused. Both JP2012174579A and CN109565033A disclose electrode assemblies with buffer spaces to facilitate bending. US2013143090A1 further discloses that said buffer spaces are arranged locally where the electrode is supposed to be bent.

### SUMMARY

In view of this, it is necessary to provide an electrode plate, an electrode assembly, a secondary battery and an electrical device to reduce a probability of fracture of the electrode plate caused due to mutual squeezing of active substances, and improve the stability of performance of the secondary battery.

In the first aspect of the invention, an electrode plate having a plurality of corner areas spaced along a first direction; when the electrode plate is wound along the first direction, the corner areas form bending layers of an electrode assembly; the electrode plate includes: a current collector; an active substance layer arranged on two opposite surfaces of the current collector; where a plurality of buffer spaces are provided on the active substance layer configured to form a concave surface of the bending layer within at least one corner area, and the buffer spaces are depressed along a thickness direction of the electrode plate, but do not penetrate through the current collector.

Regarding the electrode plate, the surface of the active substance layer for forming the concave surface of the bending layer is depressed inwardly and is provided with the buffer spaces, and the buffer spaces are arranged to do not penetrate through the current collector. During the winding process of the electrode plate having such design, the buffer spaces are used to at least partially replace redundant active substances formed when the active substance layer is bent into the concave surface. Due to this arrangement, when the active substance layer on the electrode plate bends at the corner area, buffering is generated in each buffer space, the fracture of the electrode plate caused due to mutual squeezing of the redundant active substances is avoided, and the stability of performance of the secondary battery is effectively improved accordingly.

In some embodiments, the buffer spaces are arranged to extend in a second direction within the corner area having the buffer spaces, the second direction is defined as a direction being perpendicular to a plane formed by the first direction and the thickness direction of the electrode plate. Due to this arrangement, the buffer spaces are arranged to extend along the second direction, such that the active substances arranged on opposite sides and in the second direction can be better acted on the buffer space, thereby further reducing the probability of the fracture of the current collector caused due to the mutual squeezing of the active substances.

In some embodiments, a length of each buffer space along the second direction is defined as L1, a length of the active substance layer where the buffer spaces are located along the second direction is defined as L2, L1 and L2 meet a condition of 0.3 ≤L1/L2≤1. Due to this arrangement, a ratio of L1/L2 may be controlled reasonably to realize effective buffering of bending deformation, a probability of fracture of the current collector due to the squeezing of the active substances may be reduced, and the stability of performance of the secondary battery may be improved.

According to the present invention, a plurality of buffer spaces are arranged within the corner area having the buffer spaces, and the plurality of buffer spaces are arranged to be spaced apart along the first direction. Due to this arrangement, the plurality of buffer spaces are arranged in the first direction, deformable buffer space in the first direction is increased, the fracture of the current collector caused due to mutual squeezing of the active substances during bending of the active substances is further avoided.

According to the present invention, a thickness of the active substance layer configured to form the concave surface of the bending layer is defined as D, the plurality of buffer spaces arranged within the corner area (13) are provided as a plurality of openings formed on a surface of the active substance layer, and a sum of widths of the plurality of openings along the first direction is defined as W, W and D meet a condition of 0.6× π ×D ≤W≤1.4× π ×D. Due to this arrangement, the sum W of the widths is arranged to be between 0.6 × π ×D and 1.4× π ×D, a width crumple of the surface of the active substance layer caused due to bending may be met, the active substances are avoided from squeezing with each other due to bending.

In some embodiments, the sum W of the widths also meets a condition of 50 µm≤W≤5000 µm. Due to this arrangement, the range of the sum of the widths of the openings is controlled appropriately to facilitate bending of the active substance layer with different thicknesses.

In some embodiments, the width of each buffer space along the first direction is defined as A, and the width A gradually decreases from the surface of the active substance layer towards the current collector along the thickness direction of the electrode plate. Due to this arrangement, the width of the buffer space is designed in such manner that the width of the buffer space is smaller when the buffer space is more adjacent to the current collector. Thus, the width is consistent with the change of the redundant active substances in the thickness direction of the electrode plate. Too wide buffer space that influences the performance of the secondary battery is avoided, when the effective buffering effect is achieved.

In some embodiments, within the corner area having the buffer spaces, a gap between two adjacent buffer spaces is defined as H, and H meets a condition of 25 µm ≤H≤25000 µm. Due to this arrangement, the gap between the buffer spaces is controlled to be in the range of 25 µm and 2500 µm, the design of the buffer spaces on the active substance layer is facilitated.

In some embodiments, H meets the further condition of 80 µm≤H≤1000 µm. Due to this arrangement, the gap between two adjacent buffer spaces is appropriately controlled, large squeezing internal stress caused due to bending of the electrode plate is avoided, and too wide gap between electrode plates due to too concentrated buffer spaces may also be avoided.

In some embodiments, within the corner area having the buffer spaces, each buffer space does not penetrate through the active substance layer where the buffer space is located on along the thickness direction of the electrode plate. Due to this arrangement, the active substance layer is not penetrated through, a phenomenon of falling off of the active substance layer due to the fracture of the active substance layer is avoided, a structural stability of the electrode assembly is guaranteed.

In the second aspect, an electrode assembly is provided in the present application. The electrode assembly is formed by winding a positive electrode plate, a negative electrode plate, and a diaphragm arranged to be separated between the positive electrode plate and the negative electrode plate. The electrode assembly includes a plurality of bending parts, each bending part includes several laminated bending layers; where the positive electrode plate and/or the negative electrode plate is/are the electrode plate according to any one of the electrode plates described above.

In some embodiments, the electrode assembly further includes a straight part, the number of the bending parts is two, and the two bending parts are arranged on two opposite sides of the straight part, respectively. Due to this arrangement, the electrode assembly having a flat structure with two curved ends and one straight middle part is formed.

In the third aspect, a secondary battery is provided in the present application. The secondary battery includes the electrode assembly described above.

In the fourth aspect, an electrical device is provided, the electrode device includes the secondary battery described above.

The above descriptions are only the summary of the technical solutions of the present application. In order to understand the technical solutions of the present application more clearly, the technical solutions may be implemented in accordance with the contents of the specification. In order to make the above and other objectives, features, and advantages of the present application be more apparent and understandable, the embodiments of the present application are particularly described below.

### DESCRIPTION OF THE DRAWINGS

By reading the detailed description of the preferable embodiments below, some other advantages and benefits will become clear and understandable to the person of ordinary skill in the art. In all of the drawings, the same reference numeral is used to represent the same component. In the accompanying figures:
FIG. 1 illustrates a schematic structural diagram of an electrode assembly provided in some embodiments of the present application;
FIG. 2 illustrates a schematic structural diagram of a bending layer shown in FIG. 1;
FIG. 3 illustrates a schematic structural diagram of a vehicle provided in some embodiments of the present application;
FIG. 4 illustrates a schematic diagram of a disassembled structure of a secondary battery provided in some embodiments of the present application;
FIG. 5 illustrates a top view of a structure of an electrode plate provided in some embodiments of the present application;
FIG. 6 illustrates a first cross-sectional diagram of the electrode plate within the same corner area provided in some embodiments of the present invention,
FIG. 7 illustrates a second cross-sectional diagram of the electrode plate within the same corner area provided in some embodiments of the present invention.

1000-electrical device; 100-secondary battery; 200-motor; 300-controller; 10-electrode assembly; 20-end cover; 30-electrode terminal; 40-housing; 1-electrode plate; 11-current collector; 12-buffer space; 121-first inner wall; 122-second inner wall; 123-opening; 13-corner area; 14-straight area; 15-active substance layer; 2-positive electrode plate; 3-negative electrode plate; 4-diaphragm; 5-straight part; 6-bending part; 61-bending layer; 611-concave surface; 612-convex surface; X-first direction; Y-second direction; Z-thickness direction.

### DETAILED DESCRIPTION OF EMBODIMENTS

The embodiments of the technical solutions of the present application are further described in detail with reference to the accompanying drawings. The following embodiments are only used to illustrate the technical solutions of the present application more clearly, and thus can only be used as examples.

Unless otherwise defined, all technical and scientific terms used herein have the same meaning as normally understood by the person skilled in the art. The terms used in the present application are only for the purpose of describing specific embodiments and are not intended to limit the present application. The terms "includes" and "has" in the description and claims of the present application and in the aforementioned description of drawings, and any variation thereof, are intended to cover non-exclusive inclusion.

In the descriptions of the embodiments of the present application, technical terms such as "the first" and "the second" are only for distinguishing different objects, rather than being interpreted as indicating or implying any relative importance or implicitly indicating the number, specific order or primary and secondary relation of indicated technical features. In the description of the present application, the term "a plurality of" indicates a number of at least two, unless otherwise the term "a plurality of" is explicitly and specifically defined.

Reference to "embodiments" in the present application means that a particular feature, structure or characteristic described with reference to the embodiments may be included in at least one embodiment of the present application. The occurrence of the phrase at various parts in the specification does not necessarily refer to the same embodiment, nor is it a separate or alternative embodiment being mutually exclusive with other embodiments. It is understood, both explicitly and implicitly, by those skilled in the art that the embodiments described herein may be combined with other embodiments.

In the claims and detailed description of embodiments of the present application, the term "and/or" is used to describe an association relationship of an associated object, represents that there may be three relationships, for example, A and/or B may represent three conditions: A exists alone, A and B coexist, B exists alone. In addition, the character "/" in the present application generally indicates that there is a "or" relationship between two continuous associated objects.

In the present application, "a plurality of" means more than two (including two). Similarly, "a plurality of groups" means more than two groups (including two groups), and "a plurality of sheets" means more than two sheets (including two sheets).

In the description of the embodiments of the present application, directions or location relationships represented by technical terms such as "center", "lengthwise", "crosswise", "length", "width", "thickness", "up", "down", "front", "rear", "left", "right", "vertical", "horizontal", "top", "bottom", "inside", "outside", "clockwise", "anticlockwise", "axial", "radial", "circumferential", etc., are the directions or location relationships shown in the accompanying figures, and are only intended to describe the present application conveniently and for the purpose of conciseness of description of the present application, but should not be interpreted as indicating or implying that a device or a component indicated by the terms must have specific locations and be constructed and manipulated according to the specific locations. Therefore, these terms shouldn't be considered as limitation to the present application.

In the present application, unless there is additional explicit stipulation and limitation, terms such as "mount", "connect with each other", "connect", "fix", and so on should be generalizedly interpreted, for example, "connect" may be interpreted as being fixedly connected, detachably connected, or connected integrally; "connect" can also be interpreted as being mechanically connected or electrically connected; "connect" may be further interpreted as being directly connected or indirectly connected through intermediary, or being internal communication between two components or an interaction relationship between the two components. The person of ordinary skill in the art may interpret the specific meanings of the aforementioned terms in the present application according to specific conditions.

Currently, based on the development of market situation, the application of power batteries is becoming more and more widespread. Power batteries are not only used in energy storage power systems such as hydropower, firepower, wind power, and solar power plants, but also widely used in electric vehicles such as electric bicycles, electric motorcycles, and electric vehicles, and in various fields such as military equipment and aerospace. With the continuous expansion of the application field of power batteries, the market demand of the power batteries is continuously expanding, too.

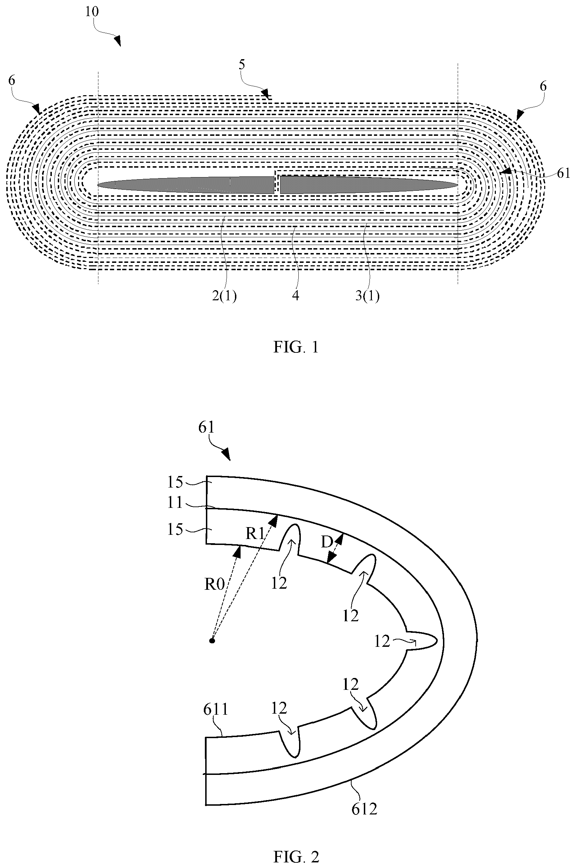

The applicant notes that, referring to FIG. 1, the electrode assembly 10 includes a straight part 5 and a bending part 6 arranged on two sides of the straight part 5 when it is constructed as a winding structure. The bending part 6 includes multiple alternately arranged bending layers 61 with different curvature radii. Referring to FIG. 2, each bending layer 61 has oppositely arranged concave surface 611 and convex surface 612, and the concave surface 611 and the convex surface 612 of the bending layer 61 are formed by bending the corresponding active substance layers 15 on the two sides of the electrode plate 1.

Due to the fact that the curvature radius of the concave surface 611 of the bending layer 61 is smaller than the curvature radius of the convex surface 612 of the bending layer 61, when the active substance layer 15 is bent to form the concave surface 611, some of the active materials become redundant, such that the active materials on the concave surface 611 squeeze one another and generate significant tensile stress on the current collector 1111. After the hot pressing process or cyclic expansion in production, the current collector 1111 on the bending layer 61 is prone to be fractured, and the stability of the performance of the secondary battery 100 is affected.

In view of this, in order to solve the problem that the bending layer 61 is prone to be fractured due to mutual squeezing of active substances on the concave surface 611, thereby affecting the stability of the performance of the secondary battery 100, the applicant has conducted an in-depth research and designed a type of electrode plate 1. Within at least one corner area 13, buffer spaces 12 are provided on an active substance layer 15 configured to form the concave surface 611 of the bending layer 61. The buffer spaces 12 are depressed along a thickness direction Z of the electrode plate 1, but do not penetrate through the current collector 1111.

The buffer spaces 12 are provided on the active substance layer 15 configured to form the concave surface 611 of the bending layer 61, and the buffer spaces 12 is controlled to not penetrate through the current collector 1111. During a winding process, the electrode plate 1 having such design utilizes buffer spaces 12 to at least partially replace the redundant active substances that occur when the active substance layer 15 is bent into the concave surface 611. In this way, when the active substance layer 15 on the electrode plate 1 bends at the corner area 13, buffer is formed in the buffer spaces 12 to avoid the fracture of the electrode plate 1 caused due to the mutual squeezing of the redundant active substances, thereby effectively improving the stability of the performance of the secondary battery 100.

The secondary battery 100 disclosed in this embodiment of the present application may be used, but is not limited to, in electrical devices 1000 such as vehicles, ships or aircrafts. A power system with power consumption device 1000 that is constituted by the secondary battery 100 disclosed in the present application may be used.

An electrical device 1000 that uses a battery as a power supply is provided in this embodiment of the present application. The electrical device 1000 may be, but is not limited to, a mobile phone, a tablet, a laptop, an electric toy, an electric tool, a storage battery car, a ship, spacecraft, etc. Where, the electric toy may include a fixed or a mobile electric toy, such as a game console, an electric car toy, an electric ship toy and an electric aircraft toy, etc. The spacecraft may include an aircraft, a rocket, a space shuttle and a spaceship, etc.

For the convenience of illustration, the present application is described by taking an electric device 1000 of one embodiment of the present application as a vehicle as an example.

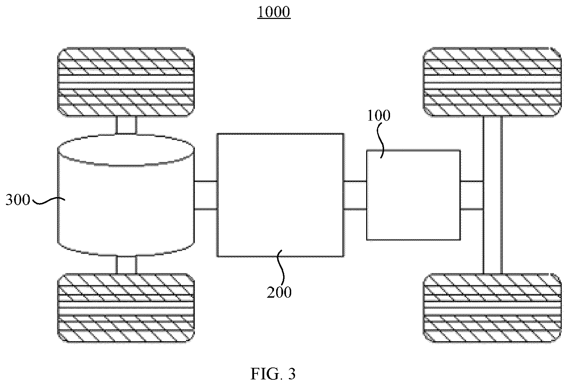

Referring to FIG. 3, FIG. 3 illustrates a schematic structural diagram of a vehicle provided in some embodiments of the present application. The vehicle may be a fuel powered vehicle, a gas powered vehicle, or a new energy vehicle. The new energy vehicle may be a pure electric vehicle, a hybrid electric vehicle, or an extended-range vehicle, etc. The interior of the vehicle is provided with a secondary battery 100, the secondary battery 100 may be arranged at the bottom, the head, or the rear of the vehicle. The secondary battery 100 may be used for supplying power for the vehicle. For example, the secondary battery 100 may be served as an operating power supply of the vehicle. The vehicle may also include a controller 300 and a motor 200, the controller 300 is used for controlling the secondary battery 100 to supply power to the motor 200. For example, the power supplied to the motor 200 is used for starting, navigation, and operation of the vehicle during driving.

In some embodiments of this application, the secondary battery 100 can not only serve as the operating source of the vehicle, but also serve as the driving source of the vehicle that replaces or partially replaces fuel or natural gas to provide driving power for the vehicle.

The number of secondary batteries 100 may be plural, and the plurality of secondary batteries 100 may be connected in series, in parallel, or in hybrid connection. The hybrid connection refers to the combination of series connection and parallel connection of the plurality of secondary batteries 100. The plurality of secondary batteries 100 may be directly connected in series, in parallel, or in the hybrid connection, and the integral structure composed of the plurality of secondary batteries 100 may be accommodated in the box. Certainly, the secondary batteries 100 may also be in the form of connecting the plurality of secondary batteries 100 in series, in parallel, or in hybrid connection firstly to form battery modules, and then connecting the multiple battery modules in series, in parallel, or in hybrid connection to form the integral structure and accommodating the integral structure in the box. The secondary battery 100 may also include other structures. For example, the secondary battery 100 may also include a current collecting component for achieving electrical connection among the plurality of secondary batteries 100. The secondary battery 100 may be shaped as a cylinder, a flat body, a cuboid or other shape.

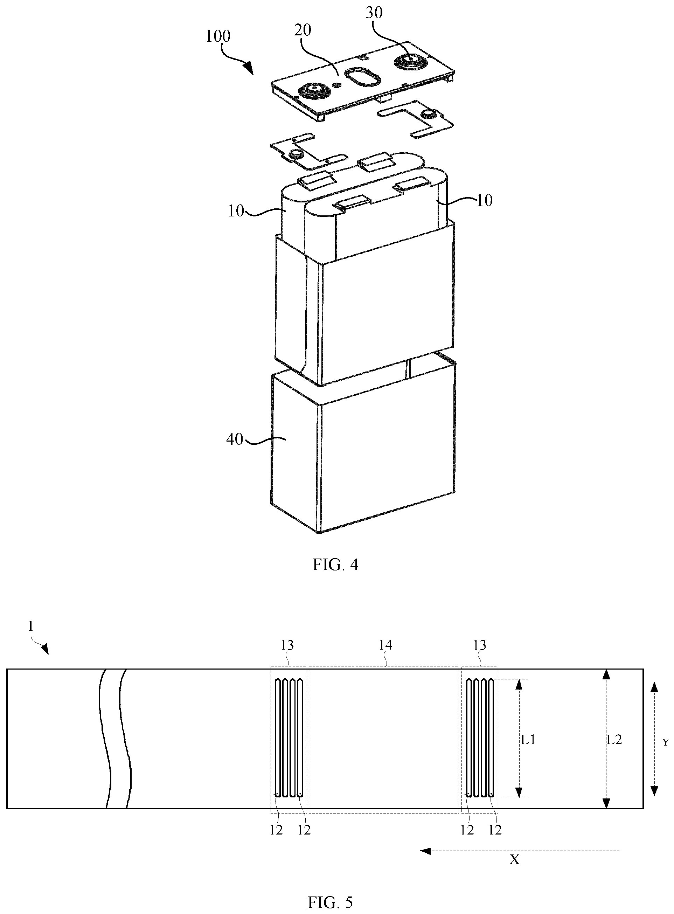

Referring to FIG. 4, FIG. 4 illustrates a schematic diagram of a disassembled structure of a secondary battery 100 provided in some embodiments of the present application. The secondary battery 100 refers to the smallest unit that constitutes a battery. As shown in FIG. 4, the secondary battery 100 includes an end cover 20, a housing 40, an electrode assembly 10, and other functional components.

The end cover 20 refers to a component that is covered on the opening of the housing 40 in order to isolate the internal environment of the secondary battery 100 from the external environment. In a nonrestrictive embodiment, a shape of the end cover 20 may adapt to a shape of the housing 40 so as to match with the housing 40. Optionally, the end cover 20 may be made of a material having certain hardness and strength (e.g., aluminum alloy). In this way, the end cover 20 is not prone to be deformed when it is squeezed and collided, the secondary battery 100 is enabled to possess higher structural strength and improved safety performance. A functional component such as an electrode terminal 30 may be arranged on the end cover 20. The electrode terminal 30 may be configured to be electrically connected with the electrode assembly 10 to output or input electrical energy of the secondary battery 100. **In** some embodiments, the end cover 20 may also be provided with a pressure relief mechanism for releasing internal pressure when the internal pressure or temperature of the secondary battery 100 reaches a threshold value. The end cover 20 may also be made of various materials, such as copper, iron, aluminum, stainless steel, aluminum alloy, plastic, etc. The material of the end cover 20 is not particularly limited in the embodiments of the present application. **In** some embodiments, an insulating piece may also be arranged on an inner side of the end cover 20, the insulating piece may be used to isolate the electrical connection components in the housing 40 from the end cover 20 so as to reduce the risk of short circuiting. For example, the insulating piece may be a plastic, a rubber, etc.

The housing 40 is a component used to match with the end cover 20 to form an internal environment of the secondary battery 100, where the formed internal environment may be used to accommodate the electrode assembly 10, electrolyte, and other components. The housing 40 and the end cover 20 may be independent components, and an opening may be arranged on the housing 40, the end cover 20 is covered on the opening so as to form the internal environment for the secondary battery 100. **In** a nonrestrictive embodiment, it is also possible to integrate the end cover 20 with the housing 40. Specifically, the end cover 20 and the housing 40 may form a common connection surface before other components are accommodated in the housing. When it needs to encapsulate the interior of the housing 40, the end cover 20 is enabled to be covered on the housing 40. The housing 40 may be of various shapes and sizes, such as rectangle, cylinder, hexagonal prism, and the like. Specifically, the shape of the housing 40 may be determined according to the specific shape and the size of the electrode assembly 10. The housing 40 may be made of various materials, such as copper, iron, aluminum, stainless steel, aluminum alloy, plastic, etc., and the material of the housing 40 are not particularly limited in the embodiments of the present application.

The electrode assembly 10 is a component in the secondary battery 100 that participates in electrochemical reactions. The housing 40 may contain one or more electrode assemblies 10. The electrode assembly 10 is mainly formed by winding or laminating a positive electrode plate 2 and a negative electrode plate 3, and a diaphragm 4 is usually provided between the positive electrode plate 2 and the negative electrode plate 3. The parts of the positive electrode plate 2 and the negative electrode plate 3 that contain active substances form the main body of the electrode assembly 10, while the parts of the positive electrode plate 2 and the negative electrode plate 3 that do not contain active substances form tabs respectively. The positive tab and the negative tab may either be located at one end of the main body or be located at two ends of the main body respectively. During the charging and discharging process of the secondary battery 100, positive active substances and negative active substances react with the electrolyte, and the tabs are connected to the electrode terminal 30 to form a current circuit.

According to some embodiments of the present application, referring to FIGS. 2, 5, and 6, an electrode plate 1 is provided in the present application. The electrode plate 1 has a plurality of corner areas 13 spaced along the first direction X, when the electrode plate 1 is wound along the first direction X, each corner area 13 forms a bending layer 61 of the electrode assembly 10. The electrode plate 1 includes a current collector 11 and an active substance layer 15 which are arranged on two opposite surfaces of the current collector 11. Where, within at least one corner area 13, buffer spaces 12 are provided on the active substance layer 15 configured to form a concave surface of the bending layer 61. The buffer spaces 12 are depressed along the thickness direction of the electrode plate 1 Z but do not penetrate through the current collector 11.

The current collector 11 refers to a component that can not only carry active substances, but also collect and output the current generated by electrode active substances. The material of the current collector 11 may be selected according to the polarity of the electrode plate 1. For example, in positive electrode plate 2, the material of the current collector 11 may be a metal material such as but is not limited to aluminum and nickel, the material of the current collector 11 may also be a composite material such as conductive resin, titanium nickel shape memory alloy, and carbon coated aluminum foil. In the negative electrode plate 3, the material of the current collector 11 may be, but is not limited to, a metal material such as copper. Certainly, the material of the current collector 11 may also be a composite material such as conductive resin and titanium nickel shape memory alloy.

The active substance layer 15 refers to the active substance coated on the current collector 11, and the material of the active substance layer 15 may be selected according to the polarity of the electrode plate 1. For example, in the positive plate 2, the material of the active substance layer 15 may be made of, but is not limited to, lithium cobalate, lithium manganate, lithium nickelate, lithium iron phosphate, ternary materials, etc. In the negative electrode plate 3, the material of the active substance layer 15 may be, but is not limited to, graphite, silicon oxide, etc.

Corner area 13 refers to multiple bending layers 61 formed on some segments of the electrode plate 1 when the electrode plate 1 is wound along the first direction X, in the preparation process of the electrode assembly 10. The area of the electrode plate 1 corresponding to the bending layer 61 is the corner area 13. Furthermore, the electrode assembly 10 formed by winding includes multiple bending parts 6, each bending part 6 includes multiple laminated bending layers 61.

Several corner areas 13 are arranged at intervals on the current collector 11 along the first direction X, a straight area 14 is provided between two adjacent corner areas 13 and is opposite to a straight part 5 of the electrode assembly 10. Furthermore, the two adjacent corner areas 13 are located on different bending parts 6 of the electrode assembly 10 after winding. For the convenience of illustration, the two bending parts 6 of the electrode assembly 10 may be defined as a left bending part 6 and a right bending part 6, respectively. During winding, a first corner area 13 is wound on the left bending part 6, and a second corner area 13 is wound on the right bending part 6. Then, a third corner area 13 is wound around the left bending part 6, and a fourth corner area 13 is wound around the right bending part 6, etc. According to this logic, the remaining corner areas 13 are wound around different bending parts 6, respectively.

In the corner areas 13 on the current collector 11, only some of the corner areas 13 may be provided with buffer spaces 12. As an alternative, all corner areas 13 may be provided with buffer spaces 12, etc.

The buffer spaces 12 refer to the inwardly depressed spaces on the surface of the active substance layer 15, these buffer spaces 12 can reduce the content of the active substances on the active substance layer 15. For example, the volume in buffer spaces 12 is exactly the same as the redundancy of the active substances during bending of the active substance layer. Furthermore, the buffer spaces 12 play a buffering effect on the deformation of the active substance layer 15 when the active substance layer 15 is bent. For example, during bending, the active substances located at two sides of the buffer space 12 is deformed towards the interior of buffer space 12 due to bending, thereby releasing internal stress due to squeezing in the buffer space 12, and thereby avoiding mutual squeezing of active substances.

There are various designs of the shapes of the buffer spaces 12 formed on the active substance layer 15. For example, the shapes of the buffer spaces 12 formed on the active substance layer 15 may be square, circular, elliptical, etc. Furthermore, the buffer spaces 12 within the same corner area can only be distributed on the active substance layer 15 that can form the concave surface. The buffer spaces 12 within the same corner area can also be arranged on the active substance layers 15 on the two sides simultaneously. In addition, the number of buffer spaces 12 may be one or plural.

The buffer spaces 12 extend along the thickness direction Z of the electrode plate 1, but do not penetrate through the current collector 11. It should be understood that the buffer spaces 12 are extended to be depressed on the active substance layer 15, but cannot penetrate through the current collector 11. For example: the buffer spaces 12 are extended to be inside the active substance layer 15. Alternatively, the buffer spaces 12 are extended to penetrate through the active substance layer 15 and reach the surface of the current collector 11. Alternatively, the buffer spaces 12 penetrate through the active substance layer 15 and extend to the interior of the current collector 11.

By utilizing the buffer spaces 12 to at least partially replacing the redundant active substances that occur when the active substance layer 15 is bent into the concave surface. Due to this arrangement, the active substance layer 15 on the electrode plate 1 will form buffers in the buffer spaces 12 when it is bent at the corner area 13, thereby avoiding the fracture of the electrode plate 1 caused due to the mutual squeezing of the redundant active substances, and thereby effectively improving the stability of the performance of the secondary battery 100.

According to some embodiments of the present application, referring to FIG. 5, within the corner area 13 having the buffer spaces 12, the buffer spaces 12 are extended along the second direction Y. The second direction Y is defined as being perpendicular to the plane formed by the first direction X and the thickness direction Z of the electrode plate 1.

The first direction X refers to the winding direction of the electrode plate 1, and can also be interpreted as the length direction of electrode plate 1. Furthermore, the second direction Y can also be interpreted as the width direction of electrode plate 1.

When the active substance layer 15 is wound in the first direction X, the active substances located on the two sides of the buffer space 12 and in the second direction Y will be squeezed and deformed towards the buffer space 12. Therefore, the buffer spaces 12 are arranged to extend along the second direction Y so as to ensure that the active substances located on the two sides and in the second direction Y may be better acted on the buffer space 12.

There are various extension states of the buffer space 12 along the second direction Y. For example, the two opposite ends of buffer space 12 extend to the two opposite sides of the active substance layer 15 along the second direction Y, that is, the buffer space 12 penetrates through the active substance layer 15 along the second direction Y. Alternatively, one end of buffer space 12 extends along the second direction Y to one side of the active substance layer 15 along the second direction Y. Alternatively, the two ends of the buffer space 12 do not extend to the two opposite sides of the active substance layer 15 along the second direction Y, etc.

In addition, in the second direction Y, the number of buffer spaces 12 may be one or plural. When there are multiple buffer spaces 12, except that one single buffer space 12 extends along the second direction Y, multiple buffer spaces 12 may also be arranged to be spaced apart in the second direction Y.

The buffer spaces 12 are arranged to extend along the second direction Y, such that the active substances on the two sides and in the second direction Y may be better acted on the buffer spaces 12, the probability of fracture of the current collector 11 caused due to the mutual squeezing of active substances is further reduced.

According to some embodiments of the present application, referring to FIG. 5, a length of a buffer space 12 in the second direction Y is defined as L1, and a length of the active substance layer 15 where buffer space 12 is located in the second direction Y is defined as L2. L1 and L2 meet a condition of 0.3≤L1/L2≤1.

When L1/L2 is equal to 1, it indicates that the buffer space 12 penetrates through the opposite sides of the active substance layer 15 in the second direction Y, which facilitates better bending of the active substance layer 15. When L1/L2 is equal to 0.3, it indicates that the minimum extension of buffer space 12 along the second direction Y can effectively reduce the probability of the fracture of the current collector 11 due to the squeezing of the active substances.

A reasonable control of the ratio of the L1/L2 can achieve effective buffering of bending deformation, reduce the probability of fracture of the current collector 11 due to the squeezing of active substances, and improve the stability of the performance of the secondary battery 100.

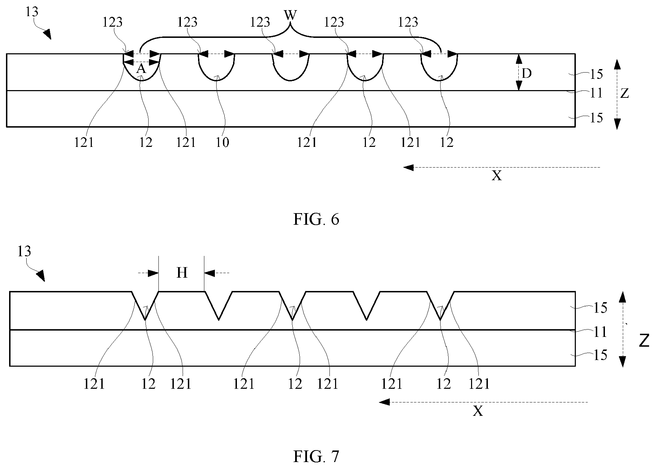

According to some embodiments of the present invention, referring to FIG. 6, the thickness of the active substance layer 15 used to form the concave surface of the bending layer 61 is defined as D, and the buffer space 12 forms an opening 123 on the surface of the active substance layer 15. The sum of the widths of the openings 123 along the first direction X is defined as W, W and D meet a condition of 0.6 × π ×D ≤W≤1.4× π ×D.

Opening 123 refers to the structures formed by the buffer spaces 12 on the surface of the active substance layer 15 away from the current collector 11, and the shapes of the openings 123 may be square, elliptical, etc. When reversely determining the width of each opening 123 in the first direction X, a value should be taken at a middle part of the opening 123 in the second direction Y, rather than at both ends of the opening 123 in the second direction Y. If the width of opening 123 in the second direction Y is variable, different positions (e.g., two or more different positions) along the second direction Y of the opening 123 may be selected for measurement. A mean value of the different width values is calculated. The calculated mean value may be used as the width value of the openings 123 along the first direction X.

The electrode plates 1 in the corner area 13 are bent to form bending layers 61. As shown in FIG. 2, a radius of a concave surface of each bending layer 61 is defined as R0, and a radius of a middle surface of the bending layer 61 (defined as a surface of the bent active substance layer 15 facing away from the concave surface) is defined as R1. In this case, a concave arc length (half of the circle) of the bending layer 61 is π×R0; the middle surface (half of the circle) of the bending layer 61 is π × R1. Due to the fact that the lengths of the upper surface and the lower surface of the active substance layer 15 before bending are equal, thus, the difference in length between the two surfaces of the active substance layer 15 after bending is π×(R1-R0)=π×(D). That is, the width of the active substance on one surface of the active substance layer 15 after bending is π×D less than the width of the active substance on the other surface of the active substance layer 15.

The sum W of the widths of openings 123 is arranged to be between 0.6×π×D and 1.4×π ×D. On one hand, width crumple caused due to bending of the surfaces of the active substance layer 15 is met, the active substances are avoided from squeezing each other due to bending (e.g., a coefficient of 0.6 indicates that a small amount of squeezing is allowed). On the other hand, regarding arranging buffer spaces on the active substance layer 15 of the negative electrode plate 3, lithium precipitation caused due to excessive loss of active substances needs to be avoided.

Due to this arrangement, the width crumple caused due to bending of the surfaces of the active substance layer 15 can be met, the active substances are avoided from squeezing each other due to bending, and lithium precipitation caused due to excessive loss of the active substances may also be avoided simultaneously.

According to some embodiments of the present application, the sum W of widths W also meets the condition of 50 µM≤W≤5000 µM.

The sum W of widths is related to the thickness of the active substance layer 15 where the buffer spaces 12 are located. If the thickness of the active substance layer 15 is relatively thin, the amount of crumple of the active substances on one surface of the active substance layer 15 is not significant. In this condition, W may be arranged to be 50 µM. If the thickness of the active substance layer 15 is thicker, and the amount of crumple of the active substances on one surface of the active substance layer 15 is greater, W may be arranged to be 5000 µM.

In this way, reasonable control of the range value of the sum of the widths of the openings 123 is beneficial for bending of the active substance layer 15 having different thicknesses.

According to some embodiments of the present application, referring to FIG. 6, a width of each buffer space 12 along the first direction X is defined as A, the width A is gradually decreased from the surface of the active substance layer 15 and towards the side of the current collector 11, along the thickness direction Z of the electrode plate 1.

When the electrode plate 1 is bent into the bending part 6, the farther away the part on the inner side of the active substance layer 15 from the part current collector 11, the greater the curvature of this part, and the more redundant the active substances. On the contrary, the closer the distance between the part and the current collector 11, the smaller the curvature of the part and the smaller the redundancy of the active substances. Thus, the width of the buffer space 12 is arranged such that the closer the distance between the buffer space 12 and the current collector 11, the smaller the width of the buffer space 12, such that the width of the buffer space 12 is enabled to be consistent with the changes in the redundancy of the active substances, and the impact on the performance of the secondary battery 100 due to two wide of the buffer space 12 is avoided, for example, lithium precipitation due to excessive gap of negative electrodes 3 is caused; alternatively, the decrease in the active substances of the positive electrode plate 2 is caused, and the capacity of the secondary battery 100 is affected.

In some embodiments of the invention, referring to FIG. 6, the inner wall of each buffer space 12 includes a first inner wall 121 and a second inner wall 122 that are oppositely spaced in the first direction X, and a spacing between the first inner wall 121 and the second inner wall 122 is the width of the buffer space 12. The first inner wall 121 and the second inner wall 122 may be arranged to be straight surfaces or curved surfaces.

In addition, referring to FIG. 6 and FIG. 7, the buffer spaces 12 are obtained from a plane formed by the first direction X and the thickness direction Z of the electrode plate 1. The obtained shapes include various shapes, such as parabolic, inverted trapezoid, triangular, etc.

The width of buffer space 12 is such designed that the closer the distance between the buffer space 12 and the current collector 11, the smaller the width of the buffer space 12, such that the width of the buffer space 12 is kept to be consistent with the changes of the redundant active substances in the thickness direction Z of the electrode plate 1. Under the condition of satisfaction of the effective buffering effect, the impact on the performance of the secondary battery 100 due to too wide width of the buffer space 12 is avoided.

According to some embodiments of the present application, referring to FIG. 5, within the corner area 13 having the buffer spaces 12, the number of the buffer spaces 12 is plural, and the plurality of buffer spaces 12 are arranged at intervals along the first direction X.

The arrangement of the plurality of buffer spaces 12 in the first direction X may increase the deformable buffer space in the first direction X, and avoid the active substance layer 15 from squeezing each other due to width crumple when the active substance layer 15 is bent.

The widths of the plurality of buffer spaces 12 on the surface of the active substance layer 15 may be kept equal or unequal. When the widths of the buffer spaces 12 are equal, a width of one single buffer space 12 on the surface of the active substance layer 15 is defined as A, and the sum of the widths of the buffer spaces 12 on the surface of the active substance layer 15 are defined as W (the sum of widths may be calculated according to the thickness of the active substance layer 15, which can refer to the above descriptions and is not repeatedly described here). The number of the buffer spaces 12 in the first direction X is defined as m. Thus, the parameters meet a following formula: A=W/m.

Due to this arrangement, multiple buffer spaces 12 are arranged in the first direction X to increase the deformable buffer space in the first direction X, the fracture of the current collector 11 caused due to the mutual squeezing of active substances during bending of the active substances is further avoided.

According to some embodiments of the present application, referring to FIG. 7, within the corner area 13 having buffer spaces 12, a gap between two adjacent buffer spaces 12 is defined as H, and H meets a condition of: 25 µm≤H≤2500 µm.

The gap between two adjacent buffer spaces 12 may be, but is not limited to, 25 µm, 2500 µm, etc. When the gap between the buffer spaces 12 is 25µm, the number of the buffer spaces 12 may be appropriately reduced to ensure that the sum of the widths of the buffer space 12 on the active substance layer 15 is constant when designing the buffer spaces 12. Similarly, when the gap between the buffer spaces 12 is 2500 µm, the number of the buffer spaces 12 may be appropriately increased when designing the buffer spaces 12.

The gap between the buffer spaces 12 is controlled to be in the range of 25 µm~2500 µm to facilitate the design of the buffer spaces 12 on the active substance layer 15.

According to some embodiments of the present application, the gap H between two adjacent buffer spaces 12 also meet a condition of 80 µm≤H≤1000 µm.

When designing the gap between adjacent buffer spaces 12, the gap should not be too large or too small. If the gap between two adjacent buffer spaces 12 is too large, there exists wider active substances between two adjacent buffer spaces 12, the active substance layer cannot be effectively bent and deformed during the active substance layer is bent, internal squeezing stress is prone to be generated. If the gap between the buffer spaces 12 is too small, the distribution of the buffer spaces 12 is concentrated, which causes the gap of a certain area of the electrode plate 1 electrode 1 to be too wide, a risk of lithium precipitation is prone to occur.

The gap between the buffer spaces is controlled to be in the range of 80 µm~1000 µm. For example, the gap between two adjacent buffer spaces 12 may be, but not limited to, 80 µm or 1000 µm, etc., which can not only facilitate the bending of the electrode plate 1 and reduce the internal squeezing stress, but also avoid the problem of uneven distribution of lithium ions caused due to excessively concentrated arrangement of the buffer spaces 12.

The gap between two adjacent buffer spaces 12 is reasonably controlled, large internal squeezing stress caused due to the bending of the electrode plate 1 is avoided, and too wide gap of the electrode plate 1 caused due to too concentrated buffer spaces 12 may also be avoided.

According to some embodiments of the present application, within the corner area 13 having the buffer spaces 12, the buffer spaces 12 do not penetrate through the active substance layer 15 where the buffer spaces 12 are located along the thickness direction Z of the electrode plate 1.

The buffer spaces 12 do not penetrate through the active substance layer 15 where the buffer spaces 12 are located along the thickness direction Z of the electrode plate 1 should be interpreted as: the buffer spaces 12 are arranged on one surface of the active substance layer 15 and extend along the thickness direction Z of the electrode plate 1; however, one end of each buffer space 12 does not extend to the other surface of the active substance layer 15 (i.e., the surface of the active substance layer 15 attached to the current collector 11).

The active substance layer 15 is not penetrated through, a phenomenon of detachment of the active substance layer 15 due to fracture is avoided, and the structural stability of the electrode assembly 10 is ensured.

According to some embodiments of the present application, referring to FIG. 1, an electrode assembly 10 is provided in the present application, the electrode assembly 10 is formed by winding a positive electrode plate 2, a negative electrode plate 3, and a diaphragm 4 separated between the positive electrode plate 2 and the negative electrode plate 3. The electrode assembly 10 includes bending parts 6, each bending part 6 includes several laminated bending layers 61. Where, the positive electrode plate 2 and/or the negative electrode plate 3 are the electrode plate 1 according to any one of the technical solutions described above.

At least one of the positive electrode plate 2 and the negative electrode plate 3 is any one of the electrode plates 1 in any of the technical solutions, for example: positive electrode plate 2 is electrode plate 1 in any of the above schemes; Alternatively, the positive electrode plate 2 and negative electrode plate 3 are the electrode plate 1 according to any one of the technical solutions described above.

The electrode assembly 10 is formed by winding the positive electrode plate 2, the negative electrode plate 3, and the diaphragm 4, and the shape of the electrode assembly 10 is a flat winding structure. Thus, the structure of the electrode assembly 10 includes a straight part 5 and bending parts 6 arranged on two sides of the straight part 5.

The bending layer 61 refers to the structure formed by bending a part of the electrode plate 1 in the corner area 13, and multiple bending layers 61 may be laminated with each other to form the bending part 6.

The aforementioned electrode assembly 10 adopts the electrode plate 1 in the technical solutions mentioned above. During the winding process, the buffer spaces 12 are used to at least partially replace the redundant active substances that occur when the active substance layer 15 is bent into the concave surface. Due to this arrangement, when the active substance layer 15 on the electrode plate 1 bends at the corner area 13, buffering is generated in each buffer space 12, and the fracture of the electrode plate 1 caused due to the mutual squeezing of the redundant active substances is avoided. Thus, the stability of the performance of the secondary battery 100 is effectively improved.

According to some embodiments of the present application, referring to FIG. 1, the electrode assembly 10 further includes a straight part 5, the number of the bending parts 6 is two, the two bending parts 6 are arranged on two opposite sides of the straight part 5 respectively.

The straight part 5 refers to the component corresponding to the large area of the flat electrode assembly 10, and the straight part 5 is formed by laminating multiple layers of straight areas 14 of the electrode plate 1.

Due to this arrangement, the electrode assembly 10 having a flat structure of two curved ends and one straight middle part is formed.

According to some embodiments of the present application, a secondary battery 100 is provided in the present application, the secondary battery includes the aforementioned electrode assembly 10.

According to some embodiments of the present application, an electrical device 1000 is provided in the present application, the electrical device 1000 includes the secondary battery 100.

According to some embodiments of the present application, an electrode plate 1 is provided in the present application. A position of a corner area 13 of the electrode plate 1 is determined according to a winding size of the electrode assembly 10, then, a method such as a laser or a machine is used to etch striped structures arranged at intervals in this corner area 13, such as the buffer spaces 12. A cross-sectional shape of each buffer space 12 includes, but is not limited to, triangle, trapezoid, or circular arc shape. Moreover, the buffer space 12 has a certain width and depth, but cannot penetrate through the current collector 11.

In order to make the objective, the technical solutions, and the advantages of the present application be more concise and clearer, the present application is further described with reference to the following embodiments. However, the present application is not limited to these embodiments. The embodiments described hereinafter are only preferable examples of the present application and may be used to describe the present application, and cannot be interpreted as limiting the scope of the present application. It should be noted that any modification, equivalent replacement, and improvement made within the spirit and the principle of the present application, should all be included in the scope of protection of the present application.

In order to describe the present application much better, the contents of the present application will be further described with reference to the embodiments. The embodiments are described below.

### Comparative example one

### Positive electrode plate 2:

A ternary material of nickel cobalt manganese (NCM811), a conductive agent acetylene black, and an adhesive polyvinylidene fluoride (PVDF) are mixed in a mass ratio of 97:2:1 and are added to a solvent NMP to prepare a positive electrode slurry; the positive electrode slurry are evenly coated on an aluminum foil, and are dried at 85 °C, and a cold pressing is performed on the aluminum foil. Then, die-cutting and subsection are performed on the aluminum foil to form a positive electrode plate 2 of a lithium-ion battery.

Where, a coating weight of the active substances on the positive electrode plate 2 is 17.6 milligrams per square centimeter (mg/cm²), and a thickness of the active substance layer 15 on the positive electrode plate 2 is 50 µm.

### Negative electrode plate 3:

A negative active substance graphite, a conductive agent acetylene black, a thickening agent sodium hydroxymethyl cellulose (CMC), and an adhesive Styrenebutadiene (SBR) are added into a solvent water in a mass ratio of 96:2:1:1, they are mixed evenly to prepare a negative paste; the negative electrode slurry are coated evenly on a copper foil, are dried at 85 °C. Then, a cold pressing is performed on the copper foil to form the negative electrode plate 3.

Where a coating weight of the negative electrode plate 3 is 10 mg/cm², and a thickness of the active substance layer 15 of the negative electrode plate 3 is 61 µm. In addition, the corner area 13 of the negative electrode plate 3 is not provided with buffer spaces 12.

### Diaphragm 4:

Polyethylene microporous film is used as a porous isolation film substrate. Inorganic alumina powder, a polyethylene pyrrolidone, and an acetone solvent are mixed evenly in a weight ratio of 3:1.5:5.5 to prepare a slurry, the slurry is coated on one side of the substrate and is dried to obtain diaphragm.

### Electrolyte:

Lithium hexafluorophosphate is dissolved in a mixed solvent of ethylene carbonate, dimethyl carbonate and methyl ethyl carbonate (a volume ratio of the ethylene carbonate, the dimethyl carbonate and the methyl ethyl carbonate is 1:2:1) to prepare the electrolyte of a lithium ion battery.

### Preparation of a secondary battery 100:

The positive electrode plate 2, the negative electrode plate 3, and the diaphragm are wound to obtain a bare cell, then, processes such as packaging, liquid injection, formation, and ventilation are performed on the bare cell to prepare the lithium-ion battery. The designed charging N/P of the battery is 1.03, and the designed capacity of the battery cell is 160Ah.

### Embodiment one

Embodiment one is basically the same as the comparative example one, except that the buffer spaces 12 (note that the depth of one single buffer space 12 may approximate to the thickness of the active substance layer 15) are arranged in the corner area 13 of the negative electrode 3 uniformly. The width of one single buffer space 12 is 19 µm, and the sum of the widths of the buffer spaces 12 is 192 µm.

### Embodiment two

Embodiment two is basically the same as the comparative example one, except that the buffer spaces 12 are uniformly arranged in the corner area 13 of the negative electrode 3. The width of one single buffer space 12 is 96 µm, and the sum of the widths of the buffer spaces 12 is 192 µm.

### Embodiment three

Embodiment three is basically the same as the comparative example one, except that the buffer spaces 12 are uniformly arranged in the corner area 13 of the negative electrode 3. The width of one single buffer space 12 is 100 µm, and the sum of the widths of the buffer spaces 12 is 1000 µm.

### Embodiment four

Embodiment four is basically the same as the comparative example one, except that the buffer spaces 12 are uniformly arranged in the corner area 13 of the negative electrode 3. The width of one single buffer space 12 is 1000 µm, and the sum of the widths of the buffer spaces 12 is 1000 µm.

### Embodiment five

Embodiment five is basically the same as the comparative example one, except that the buffer spaces 12 are uniformly arranged in the corner area 13 of the negative electrode 3. The width of one single buffer space 12 is 300 µm, and the sum of the widths of the buffer spaces 12 is 3000 µm.

The secondary battery prepared in the comparative examples and the embodiments are used, the fracture frequency of the corner area 13 during the hot pressing shaping process of the winding structure is recorded. Moreover, after the preparation of the secondary battery 100 is completed, the secondary battery 100 is charged to 4.2V at 0.33C. Then, the secondary battery is discharged to 2.8V at 0.33C. After the process is cyclically performed for 2000 times, the secondary battery is disassembled and whether fractures and lithium precipitation are occurred at the corner areas is observed. Regarding the detail of the result, reference can be made to table 1.

It can be seen from table 1 that, after comparing the embodiment one, the embodiment two, the embodiment three, the embodiment four and the embodiment five with the comparative example one, it is concluded that the problem of the fracture of the bending layers 61 of the electrode assembly 10 can be effectively solved by arranging the buffer spaces 12 in the corner area 13.

**Table 1**

| Group | The sum of widths (µm) of Buffer area 12 | Width (µm) of one single Buffer area 12 | Whether a bending layer 61 is fractured | Whether lithium precipitation occurs at the bending layer 61 |
|---|---|---|---|---|
| Comparative example | 0 | 0 | Yes | / |
| Embodiment one | 192 | 19 | No | No |
| Embodiment two | 192 | 96 | No | No |
| Embodiment three | 1000 | 100 | No | No |
| Embodiment four | 1000 | 1000 | No | Yes |
| Embodiment five | 3000 | 300 | No | Yes |

After comparing among the embodiment three, the embodiment four and the embodiment five, it can be concluded that, when the sum of widths of the buffer spaces 12 or the width of one single buffer space 12 is too large, a too large gap of the bending layers 61 of the negative electrode plate 3 can be caused, and a problem of lithium precipitation is generated accordingly.

## Claims

1. An electrode plate (1) having a plurality of corner areas (13) spaced along a first direction (X), the corner areas (13) form bending layers (61) of an electrode assembly (10) when the electrode plate (1) is wound along the first direction (X);
the electrode plate (1) comprises:
a current collector (11);
an active substance layer (15) arranged on two opposite surfaces of the current collector (11);
wherein buffer spaces (12) are arranged on the active substance layer (15) configured to form a concave surface (611) of one bending layer (61) within at least one of the corner areas (13), and each buffer space (12) is depressed towards a thickness direction (Z) of the electrode plate (1), but does not penetrate through the current collector (11),
wherein a plurality of buffer spaces (12) are arranged within the corner area (13), and the plurality of buffer spaces (12) are arranged to be spaced apart along the first direction (X),
**characterized in that**
a thickness of the active substance layer (15) configured to form the concave surface (611) of the bending layer (61) is defined as D, the plurality of buffer spaces (12) arranged within the corner area (13) are provided as a plurality of openings (123) formed on one surface of the active substance layer (15), a sum of widths of the plurality of openings (123) along the first direction (X) is defined as W, and W and D meet a condition of 0.6 × π ×D ≤W≤1.4× π ×D.

2. The electrode plate (1) according to claim 1, wherein the buffer spaces (12) are arranged to extend in a second direction (Y) within the corner area (13) having the buffer spaces (12), and the second direction (Y) is defined as a direction being perpendicular to a plane formed by the first direction (X) and the thickness direction (Z) of the electrode plate (1).

3. The electrode plate (1) according to claim 2, wherein a length of the buffer space (12) along the second direction (Y) is defined as L1, a length of the active substance layer (15) where the buffer spaces (12) are located along the second direction (Y) is defined as L2, and L1 and L2 meet a condition of 0.3≤L1/L2≤1.

4. The electrode plate (1) according to any one of claims 1-3, wherein the sum W of the widths also meets a condition of 50 µm≤W≤5000 µm.

5. The electrode plate (1) according to any one of claims 1-4, wherein the width of the buffer space (12) along the first direction (X) is defined as A, and the width A gradually decreases along the thickness direction (Z) of the electrode plate (1) from the surface of the active substance layer (15) towards the current collector (11).

6. The electrode plate (1) according to any one of claims 1-5, wherein within the corner area (13) having the buffer spaces (12), a gap between two adjacent buffer spaces (12) is defined as H, and H meets a condition of 25µm≤H≤25000µm.

7. The electrode plate (1) according to claim 6, wherein H meets a further condition of 80 µm≤H≤1000 µm.

8. The electrode plate (1) according to any one of claims 1-7, wherein within the corner area (13) having the buffer spaces (12), each of the buffer spaces (12) does not penetrate through the active substance layer (15) where the buffer spaces (12) are located along the thickness direction (Z) of the electrode plate (1).

9. An electrode assembly (10) formed by winding a positive electrode plate (2), a negative electrode plate (3), and a diaphragm (4) arranged to be separated between the positive electrode plate (2) and the negative electrode plate (3), the electrode assembly (10) comprises bending parts (6), each of the bending parts (6) comprises a plurality of laminated bending layers (61);
**characterized in that**, the positive electrode plate (2) and/or the negative electrode plate (3) is/are the electrode plate (1) according to any one of claims 1-8.

10. The electrode assembly (10) according to claim 9, further comprising a straight part (5), a number of the bending parts (6) is two, and the two bending parts (6) are arranged on two opposite sides of the straight part (5), respectively.

11. A secondary battery (100), **characterized in that**, the secondary battery (100) comprises the electrode assembly (10) according to claim 9 or claim 10.

12. An electrical device (1000), **characterized in that**, the electrode device (100) comprises the secondary battery (100) according to claim 11.

## Patentansprüche

1. Elektrodenplatte (1) mit einer Mehrzahl von Eckbereichen (13), die entlang einer ersten Richtung (X) voneinander beabstandet sind, wobei die Eckbereiche (13) Biegeschichten (61) einer Elektrodenanordnung (10) bilden, wenn die Elektrodenplatte (1) entlang der ersten Richtung (X) aufgewickelt wird;
wobei die Elektrodenplatte (1) umfasst:
einen Stromableiter (11);
eine Aktivsubstanzschicht (15), die auf zwei einander gegenüberliegenden Oberflächen des Stromableiters (11) angeordnet ist;
wobei Pufferräume (12) auf der Aktivsubstanzschicht (15) angeordnet sind, die dazu eingerichtet ist, eine konkave Oberfläche (611) einer Biegeschicht (61) innerhalb mindestens eines der Eckbereiche (13) zu bilden, und jeder Pufferraum (12) in Richtung einer Dickenrichtung (Z) der Elektrodenplatte (1) vertieft ist, jedoch nicht durch den Stromableiter (11) hindurchdringt,
wobei eine Mehrzahl von Pufferräumen (12) innerhalb des Eckbereichs (13) angeordnet ist und die Mehrzahl von Pufferräumen (12) so angeordnet ist, dass sie entlang der ersten Richtung (X) voneinander beabstandet ist,
**dadurch gekennzeichnet, dass**
eine Dicke der Aktivsubstanzschicht (15), die dazu eingerichtet ist, die konkave Oberfläche (611) der Biegeschicht (61) zu bilden, als D definiert ist, die Mehrzahl von Pufferräumen (12), die innerhalb des Eckbereichs (13) angeordnet ist, als eine Mehrzahl von Öffnungen (123) vorgesehen ist, die auf einer Oberfläche der Aktivsubstanzschicht (15) ausgebildet sind, eine Summe von Breiten der Mehrzahl von Öffnungen (123) entlang der ersten Richtung (X) als W definiert ist, und W und D eine Bedingung von 0,6 × π × D ≤ W ≤ 1,4 × π × D erfüllen.

2. Elektrodenplatte (1) nach Anspruch 1, wobei die Pufferräume (12) so angeordnet sind, dass sie sich in einer zweiten Richtung (Y) innerhalb des Eckbereichs (13), der die Pufferräume (12) aufweist, erstrecken, und die zweite Richtung (Y) als eine Richtung definiert ist, die senkrecht zu einer Ebene ist, die durch die erste Richtung (X) und die Dickenrichtung (Z) der Elektrodenplatte (1) gebildet wird.

3. Elektrodenplatte (1) nach Anspruch 2, wobei eine Länge des Pufferraums (12) entlang der zweiten Richtung (Y) als L1 definiert ist, eine Länge der Aktivsubstanzschicht (15), an der sich die Pufferräume (12) befinden, entlang der zweiten Richtung (Y) als L2 definiert ist, und L1 und L2 eine Bedingung von 0,3 ≤ L1/L2 ≤ 1 erfüllen.

4. Elektrodenplatte (1) nach einem der Ansprüche 1 bis 3, wobei die Summe W der Breiten ferner eine Bedingung von 50 µm ≤ W ≤ 5000 µm erfüllt.

5. Elektrodenplatte (1) nach einem der Ansprüche 1 bis 4, wobei die Breite des Pufferraums (12) entlang der ersten Richtung (X) als A definiert ist und die Breite A entlang der Dickenrichtung (Z) der Elektrodenplatte (1) von der Oberfläche der Aktivsubstanzschicht (15) zu dem Stromableiter (11) hin allmählich abnimmt.

6. Elektrodenplatte (1) nach einem der Ansprüche 1 bis 5, wobei innerhalb des Eckbereichs (13), der die Pufferräume (12) aufweist, ein Abstand zwischen zwei benachbarten Pufferräumen (12) als H definiert ist und H eine Bedingung von 25 µm ≤ H ≤ 25000 µm erfüllt.

7. Elektrodenplatte (1) nach Anspruch 6, wobei H ferner eine Bedingung von 80 µm ≤ H ≤ 1000 µm erfüllt.

8. Elektrodenplatte (1) nach einem der Ansprüche 1 bis 7, wobei innerhalb des Eckbereichs (13), der die Pufferräume (12) aufweist, jeder der Pufferräume (12) nicht durch die Aktivsubstanzschicht (15), an der sich die Pufferräume (12) befinden, entlang der Dickenrichtung (Z) der Elektrodenplatte (1) hindurchdringt.

9. Elektrodenanordnung (10), gebildet durch Aufwickeln einer positiven Elektrodenplatte (2), einer negativen Elektrodenplatte (3) und einer Membran (4), die so angeordnet ist, dass sie zwischen der positiven Elektrodenplatte (2) und der negativen Elektrodenplatte (3) getrennt ist, wobei die Elektrodenanordnung (10) Biegeteile (6) umfasst, wobei jedes der Biegeteile (6) eine Mehrzahl von laminierten Biegeschichten (61) umfasst;
**dadurch gekennzeichnet, dass** die positive Elektrodenplatte (2) und/oder die negative Elektrodenplatte (3) die Elektrodenplatte (1) nach einem der Ansprüche 1 bis 8 ist/sind.

10. Elektrodenanordnung (10) nach Anspruch 9, ferner umfassend einen geraden Teil (5), wobei eine Anzahl der Biegeteile (6) zwei beträgt und die zwei Biegeteile (6) jeweils auf zwei einander gegenüberliegenden Seiten des geraden Teils (5) angeordnet sind.

11. Sekundärbatterie (100), **dadurch gekennzeichnet, dass** die Sekundärbatterie (100) die Elektrodenanordnung (10) nach Anspruch 9 oder Anspruch 10 umfasst.

12. Elektrische Vorrichtung (1000), **dadurch gekennzeichnet, dass** die Elektrodenvorrichtung (100) die Sekundärbatterie (100) nach Anspruch 11 umfasst.

## Revendications

1. Plaque d'électrode (1) ayant une pluralité de zones d'angle (13) espacées le long d'une première direction (X), les zones d'angle (13) formant des couches de flexion (61) d'un ensemble d'électrodes (10) lorsque la plaque d'électrode (1) est enroulée le long de la première direction (X) ;
la plaque d'électrode (1) comprend :
un collecteur de courant (11) ;
une couche de substance active (15) agencée sur deux surfaces opposées du collecteur de courant (11) ;
dans laquelle des espaces tampons (12) sont agencés sur la couche de substance active (15) configurée pour former une surface concave (611) d'une couche de flexion (61) à l'intérieur d'au moins l'une des zones d'angle (13), et chaque espace tampon (12) est enfoncé vers une direction d'épaisseur (Z) de la plaque d'électrode (1), mais ne pénètre pas à travers le collecteur de courant (11),
dans laquelle une pluralité d'espaces tampons (12) est agencée à l'intérieur de la zone d'angle (13), et la pluralité d'espaces tampons (12) est agencée de manière à être espacée le long de la première direction (X),
**caractérisée en ce que**
une épaisseur de la couche de substance active (15) configurée pour former la surface concave (611) de la couche de flexion (61) est définie comme D, la pluralité d'espaces tampons (12) agencée à l'intérieur de la zone d'angle (13) est prévue sous la forme d'une pluralité d'ouvertures (123) formées sur une surface de la couche de substance active (15), une somme de largeurs de la pluralité d'ouvertures (123) le long de la première direction (X) est définie comme W, et W et D satisfont à une condition de 0,6 × π × D ≤ W ≤ 1,4 × π × D.

2. Plaque d'électrode (1) selon la revendication 1, dans laquelle les espaces tampons (12) sont agencés de manière à s'étendre dans une deuxième direction (Y) à l'intérieur de la zone d'angle (13) ayant les espaces tampons (12), et la deuxième direction (Y) est définie comme une direction étant perpendiculaire à un plan formé par la première direction (X) et la direction d'épaisseur (Z) de la plaque d'électrode (1).

3. Plaque d'électrode (1) selon la revendication 2, dans laquelle une longueur de l'espace tampon (12) le long de la deuxième direction (Y) est définie comme L1, une longueur de la couche de substance active (15) où les espaces tampons (12) sont situés le long de la deuxième direction (Y) est définie comme L2, et L1 et L2 satisfont à une condition de 0,3 ≤ L1/L2 ≤ 1.

4. Plaque d'électrode (1) selon l'une quelconque des revendications 1 à 3, dans laquelle la somme W des largeurs satisfait également à une condition de 50 µm ≤ W ≤ 5000 µm.

5. Plaque d'électrode (1) selon l'une quelconque des revendications 1 à 4, dans laquelle la largeur de l'espace tampon (12) le long de la première direction (X) est définie comme A, et la largeur A diminue progressivement le long de la direction d'épaisseur (Z) de la plaque d'électrode (1) depuis la surface de la couche de substance active (15) vers le collecteur de courant (11).

6. Plaque d'électrode (1) selon l'une quelconque des revendications 1 à 5, dans laquelle, à l'intérieur de la zone d'angle (13) ayant les espaces tampons (12), un intervalle entre deux espaces tampons (12) adjacents est défini comme H, et H satisfait à une condition de 25 µm ≤ H ≤ 25000 µm.

7. Plaque d'électrode (1) selon la revendication 6, dans laquelle H satisfait en outre à une condition de 80 µm ≤ H ≤ 1000 µm.

8. Plaque d'électrode (1) selon l'une quelconque des revendications 1 à 7, dans laquelle, à l'intérieur de la zone d'angle (13) ayant les espaces tampons (12), chacun des espaces tampons (12) ne pénètre pas à travers la couche de substance active (15) où les espaces tampons (12) sont situés le long de la direction d'épaisseur (Z) de la plaque d'électrode (1).

9. Ensemble d'électrodes (10) formé par enroulement d'une plaque d'électrode positive (2), d'une plaque d'électrode négative (3), et d'une membrane (4) agencée de manière à être séparée entre la plaque d'électrode positive (2) et la plaque d'électrode négative (3), l'ensemble d'électrodes (10) comprend des parties de flexion (6), chacune des parties de flexion (6) comprend une pluralité de couches de flexion (61) stratifiées ;
**caractérisé en ce que** la plaque d'électrode positive (2) et/ou la plaque d'électrode négative (3) est/sont la plaque d'électrode (1) selon l'une quelconque des revendications 1 à 8.

10. Ensemble d'électrodes (10) selon la revendication 9, comprenant en outre une partie droite (5), un nombre des parties de flexion (6) étant de deux, et les deux parties de flexion (6) étant agencées respectivement sur deux côtés opposés de la partie droite (5).

11. Batterie secondaire (100), **caractérisée en ce que** la batterie secondaire (100) comprend l'ensemble d'électrodes (10) selon la revendication 9 ou la revendication 10.

12. Dispositif électrique (1000), **caractérisé en ce que** le dispositif d'électrode (100) comprend la batterie secondaire (100) selon la revendication 11.
